# EUROPÄISCHE PATENTSCHRIFT

(11) **EP 1 941 184 B1**
(45) Veröffentlichungstag und Bekanntmachung des Hinweises auf die Patenterteilung: **24.02.2010**
(21) Anmeldenummer: 03766297.0
(22) Anmeldetag: 25.07.2003
(51) Int. Cl.: F16H 29/16

(54) **KONTINUIERLICH VARIIERBARE ÜBERSETZUNG**
CONTINUOUSLY VARIABLE TRANSMISSION
TRANSMISSION VARIABLE DE MANIERE CONTINUE

(30) Priorität: 29.07.2002 DE 10234463
(43) Veröffentlichungstag der Anmeldung: 09.07.2008
(73) Patentinhaber: Heck, Werner, 73207 Plochingen (DE)
(72) Erfinder: HECK, Werner, 73207 Plochingen (DE); KRAFT, Axel, 71717 Beilstein (DE); BAUR, Jürgen, 71679 Asperg (DE); KLUGE, Matthias, 71679 Asperg (DE)
(74) Vertreter: Molnia, David
(86) Internationale Anmeldenummer: PCT/EP2003/008203
(87) Internationale Veröffentlichungsnummer: WO 2004/013518

(56) Entgegenhaltungen:
- BE-A- 664 473
- DE-A- 10 032 479
- FR-A- 546 675
- GB-A- 305 034
- GB-A- 389 836
- GB-A- 465 110
- NL-A- 8 103 546

## Beschreibung

Die Erfindung bezieht sich auf eine kontinuierlich variierbare Übersetzung von Drehzahl und Drehmoment mit einer radial verstellbaren und über Zahnräder oder pneumatisch, hydraulisch, elektrisch, mechanisch angetriebenen Führungseinrichtung, z.B. einer Langlochscheibe oder einer Gleitschienenanordnung, in der Hebel gelagert und geführt werden zur Verwendung in Personenfahrzeugen, Nutzfahrzeugen, Schiffen, Eisenbahnen, Maschinenbau, Krafterzeugungsmaschinen und Arbeitsmaschinen.

Übersetzung von Drehzahl und Drehmoment werden üblicherweise als Getriebe bezeichnet. Sie ermöglichen eine von einem Antrieb geliefertes Drehmoment und Drehzahl in eine andere Drehmoment-Drehzahlkombination zu übersetzen. Getriebe können manuell oder automatisch sein. Hierbei unterscheidet man Getriebe mit festgelegten Übersetzungen, die als Stufengetriebe bezeichnet werden, und stufenlosen Getrieben, die ein kontinuierliches Spektrum an Übersetzungen zur Verfügung stellen. Herkömmliche stufenlose Getriebe werden vorteilhaft eingesetzt, um die Motorentwicklung zu vereinfachen und den Kraftstoffverbrauch zu minimieren, da kein maximales Drehmoment mehr über einen größeren Drehzahlbereich anliegen muss. Außerdem wird der Antriebsstrang im Vergleich zu manuellen oder automatischen Schaltgetrieben geschont, da keine Spitzendrehmomente mehr auftreten. Stufenlose Getriebe ermöglichen daher auch eine konstante Zugkraft bei der Beschleunigung, darüber hinaus ermöglichen sie eine schnellere Beschleunigung als bei Einsatz manueller oder automatischer Schaltgetriebe

Stufenlose Getriebe werden dabei nach der Art der Realisierung in 4 Klassen eingeteilt.
- Hydraulische Getriebe
- Umschlingungsgetriebe
- Reibräder Getriebe
- Leistungsverzweigte Getriebe

Hydraulische Getriebe werden üblicherweise aus der Kombination einer Hydraulikpumpe und eines Hydraulikmotors gebildet. Mechanische Energie wird von der Pumpe in hydraulische und vom Motor wieder in mechanische Energie gewandelt. In Verbindung mit einer verstellbaren Pumpe oder Stromregelventil kann das Übersetzungsverhältnis stufenlos verändert werden. Der Einsatz erfolgt häufig als Fahrantrieb für Arbeitsfahrzeuge. Die Getriebe können im offenen oder im geschlossenem Kreislauf aufgebaut werden. Nachteil dieser Getriebe ist die hohe Verlustleistung.

Umschlingungsgetriebe werden üblicherweise aus zwei kegelförmigen Scheiben und einer Umschlingung in Form eines Riemens, einer Kette oder eines Gliederbandes gebildet. Hierbei sind die kegelförmigen Scheiben spiegelverkehrt nebeneinander angeordnet, so dass der dünnere Abschnitt des einen Kegels dem dickeren Abschnitt des anderen Kegels gegenüber angeordnet ist. Über beide kegelförmigen Scheiben hinweg bildet die Umschlingung die Verbindung. Durch Änderung der Position der Umschlingung auf den Scheiben oder durch Änderung der Position der kegelförmige Scheiben selbst kann das Übersetzungsverhältnis variiert werden. Nachteil dieses Getriebes ist, dass die Kraft über relativ kleine Flächen übertragen wird und daher die maximal übertragbare Leistung gering ist.

Reibräder Getriebe werden üblicherweise aus zwei toroidförmigen Scheiben und zwischen den Scheiben angeordneten Reibrädern aufgebaut. Die Scheiben sind koaxial angeordnet und die Reibräder sind in Reibkontakt mit den Scheiben und ändern durch Verschwenkung das Übersetzungsverhältnis. Nachteil dieser Getriebe ist, dass sie nur eine Übertragung kleiner Drehmomente zulassen.

Leistungsverzweigte Getriebe werden üblicherweise aus einem mechanischen und z.B. einem hydraulischen Getriebe aufgebaut. Hierbei wird ein Antrieb derart genutzt, dass er sowohl rein mechanische Leistung zur Verfügung als auch hydraulische Leistung zur Verfügung stellt. Beide Leistungsanteile werden dann über eine Summierungseinrichtung wieder zusammengeführt. Ein typischer Aufbau hierfür ist der Aufbau in Form eines Planetengetriebes, bei dem der eine Teil das Sonnenrad antreibt und der andere das Hohlrad. Der Planetenträger übernimmt dann die Funktion einer Summierungseinrichtung. Nachteilig ist, dass bei diesen Getrieben wegen des schlechten Wirkungsgrades des hydraulischen Getriebeteiles nur geringe stufenlose Übersetzungsbereiche zur Verfügung stehen und da sie sowohl mechanische als auch hydraulische Getriebeanteile beinhalten komplex und häufig voluminös sind.

Die GB-A-389 836 wird als nächstliegender Stand der Technik gegenüber dem Gegenstand der unabhängigen Ansprüche 1 und 6 angesehen.

Aufgabe der vorliegenden Erfindung ist es eine kontinuierlich variierbare Übersetzung für Drehmoment und Drehzahl zur Verfügung zu stellen, welche die bekannten Nachteile und Problem, insbesondere eine stufenlosen Änderung der Drehzahl bei hohem Wirkungsgrad, vermeidet.

Die vorliegende Erfindung bietet zur Lösung dieser Aufgabe eine stufenlose Änderung der Drehzahl bei einem hohen Wirkungsgrad, selbst bei hohen Drehmomenten. Durch Einsatz einer radial versetzbaren Führungseinrichtung, z.B. einer Langlochscheibe oder einer Gleitschienenanordnung, in der Hebel gelagert werden, kann durch den Grad des radialen Versatzes das Übersetzungsverhältnis kontinuierlich verstellt werden. Wird die Führungseinrichtung radial zur Antriebswelle versetzt, so entsteht an den in der Führungseinrichtung geführten Hebeln eine oszillierende Drehzahl. Hierbei wird der Umlaufweg der Führungseinrichtung durch den radialen Versatz in Umlaufwege der Hebel umgesetzt. Da die Hebel Wellen mit Freiläufen antreiben, trägt immer nur der Hebel mit der höchsten Umlaufgeschwindigkeit zur Übersetzung bei und legt dabei einen Teilweg zurück. Die Summe der Teilwege infolge der Wirkung der Freiläufe ist jedoch größer als der ursprüngliche Umlaufweg der Führungseinrichtung.

Durch entsprechenden invertierten Aufbau, kann auch eine Schubbegrenzung im Sinne einer Bremswirkung erreicht werden.

Darüber hinaus kann durch Kombination eines invertierten mit einem nicht-invertierten Aufbaus das Getriebe in einen Zug- und einen Schubteil unterteilt werden. Hierdurch kann die volle Bremswirkung des Antriebes genutzt werden. Außerdem ermöglicht diese Anordnung auch die stufenlose Umkehr der Drehrichtung (Vorwärts - Rückwärts). Ein weiterer Vorteil dieser Ausführung liegt darin, dass man einen sogenannten Nullpunkt festlegen kann, d. h. die Ausgangsdrehzahl beträgt null unabhängig von der anliegenden Eingangsdrehzahl, somit könnte z.B. ein Fahrzeug an einem Gefälle oder einer Steigung ohne Bremse festgestellt werden, möchte man aus dieser Position das Fahrzeug bewegen, müsste dazu die Langlochscheibe nur radial aus der Nullpunktsstellung heraus versetzt werden. Somit wird die Verwendung einer Kupplung überflüssig.

Darüber hinaus kann das Getriebe durch verschiedene Mittel, z.B. manuell, durch Servomotor(en) oder auch hydraulisch angesteuert werden, wobei die Getriebeausführung unabhängig von der Ansteuerung ist. Das Getriebe selbst zeichnet sich durch ein geringes Eigengewicht aus und kann aus wenigen, gängigen Bauteilen aufgebaut werden. Durch geschickte Anordnung und Kombination kann das Getriebe derartig aufgebaut werden, dass der Antriebsstrang völlig Kupplungsfrei ist und zudem eine maximale Ausnutzung der Antriebsbremswirkung (Motorbremse) bietet.

Daher ist das stufenlose Getriebe universell in Personenfahrzeugen, Nutzfahrzeugen, Diesellokomotiven, Schiffsantrieben, im Maschinenbau, in Windkraftanlagen und in Arbeitsmaschinen einsetzbar.

Anhand der Zeichnung wird eine bevorzugte Ausführungsform der vorliegenden Erfindung nachstehend eingehend erläutert.
Fig. 1a zeigt eine Ausführungsform des Getriebes in einer Schnittzeichnung;
Fig. 1b zeigt eine weitere Ausführungsform des Getriebes mit getrenntem Steuer- und Hauptantrieb in einer Schnittzeichnung;
Fig. 1c zeigt ein Funktionsprinzip einer Glättungseinrichtung;
Fig. 1d zeigt eine Ausführungsform des Getriebes ohne Glättungseinrichtung;
Fig. 2 zeigt eine Explosionszeichnung der Langlochscheibe mit Hebeln, Hebelträger und Wellen;

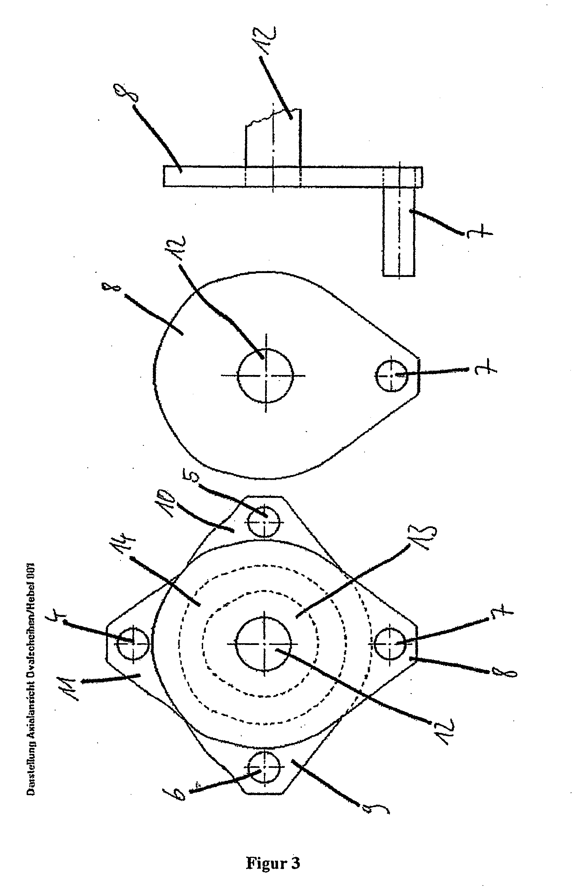

Fig. 3 zeigt eine Axialansicht der Hebelträger mit Hebeln und Wellen;
Fig. 4 zeigt die radiale Verschiebung der Langlochscheibe in axialer Rückansicht gegen die Antriebswelle;
Fig. 5 zeigt die radiale Verschiebung der Langlochscheibe in axialer Frontansicht mit der Antriebswelle;
Fig. 6 zeigt das Getriebe gemäß Fig. 1a in Stellung der maximalen Übersetzung in einer Schnittzeichnung;
Fig. 7 zeigt eine weitere Ausführungsform eines Getriebes in einer Schnittzeichnung.

### Funktionsbeschreibung:

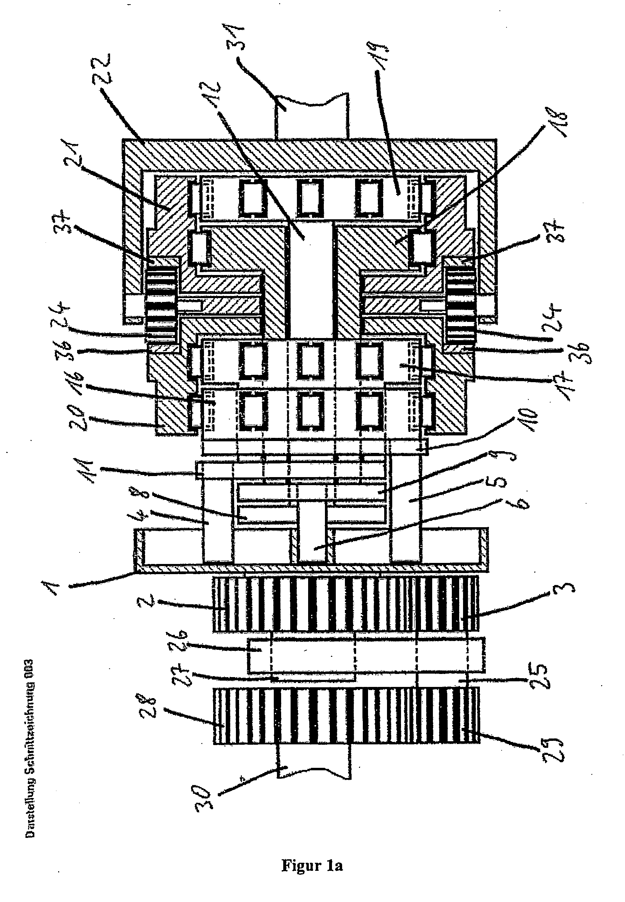

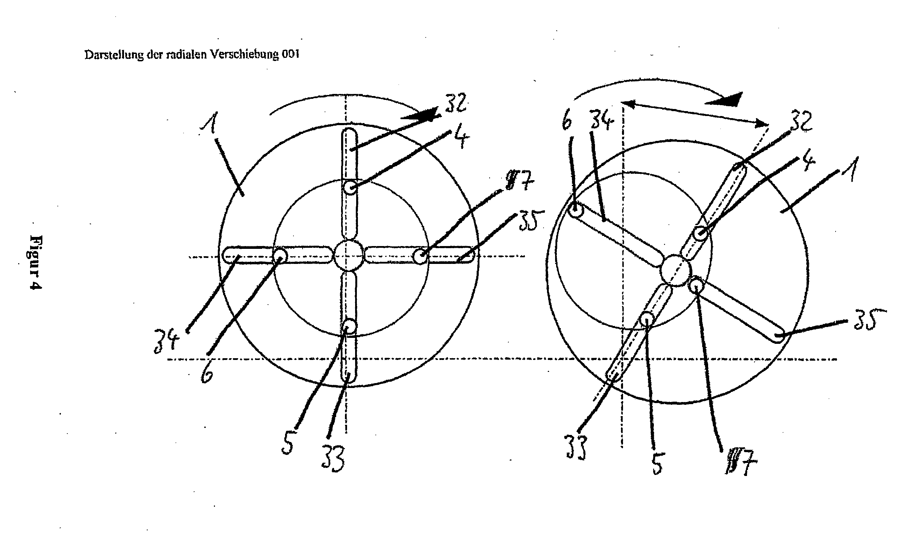

In Fig. 1a wird eine Ausführungsform eines Getriebes mit unendlich variierbarer Übersetzung von Drehzahl und Drehmoment gezeigt. Das Getriebe weist wie in Fig. 4 gezeigt im Inneren eine radial verstellbaren Langlochscheibe (1) auf, in der vier Langlöcher (32,33,34,35) angeordnet sind, in denen die Hebel (4,5,6,7) gelagert und geführt werden. Andere Anzahlen wären jedoch auch möglich. Weiterhin ist möglich, die Führungseinrichtung anstatt mit einer Langlochscheibe (1) mit Langlöchern (32,33,34,35) durch äquivalent angeordnete Gleitschienen zu realisieren. Im folgenden wird die Führungseinrichtung nur am Beispiel einer Langlochscheibe (1) erläutert, da der Aufbau mit einer Gleitschienenanordnung nur eine alternative Ausführungsform darstellt.

Der funktionale Aufbau eines erfindungsgemäßen Getriebes wird dabei anhand des Kraftflusses illustriert.

In der in Figur 1a aufgeführten Ausführungsform weist das Getriebe einen Steuerantrieb auf. Der Steuerantrieb setzt sich zusammen aus Zahnrädern (28,29,3,2) sowie Wellen (25,27) und wirkt mittels des Hebel (26). Sowohl Steuer- als auch Haupantrieb können sich einer gemeinsamen Kraftquelle bedienen.

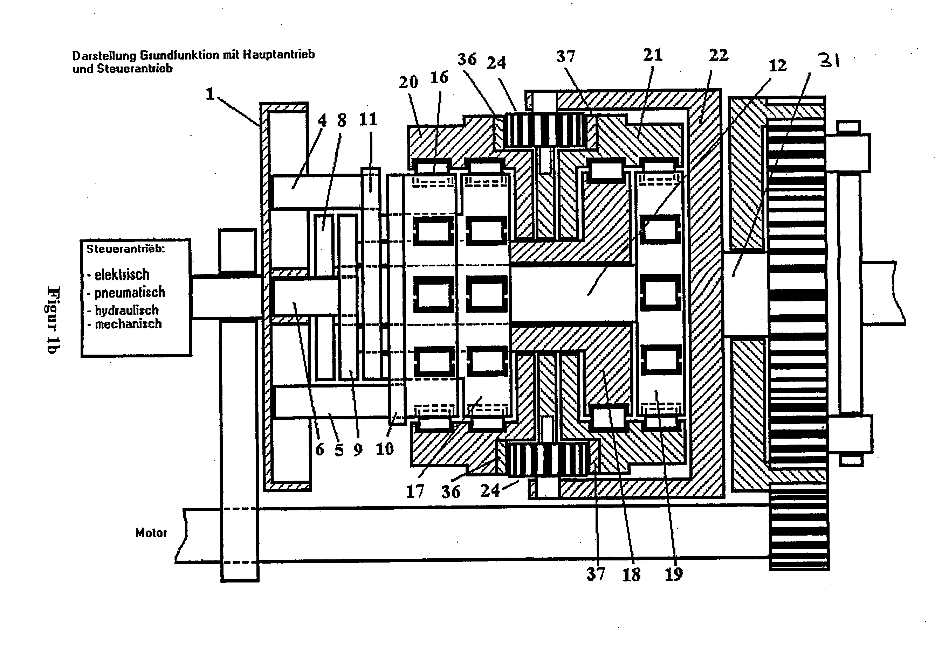

In der in Figur 1b aufgeführten Ausführungsform weist das Getriebe einen schematisch angedeuteten Steuerantrieb auf. Dieser kann geeignet ausgeführt sein, z.B. pneumatisch, hydraulisch, elektrisch oder mechanisch. Der Steuerantrieb muss nicht notwendigerweise aus der selben Kraftquelle versorgt werden.

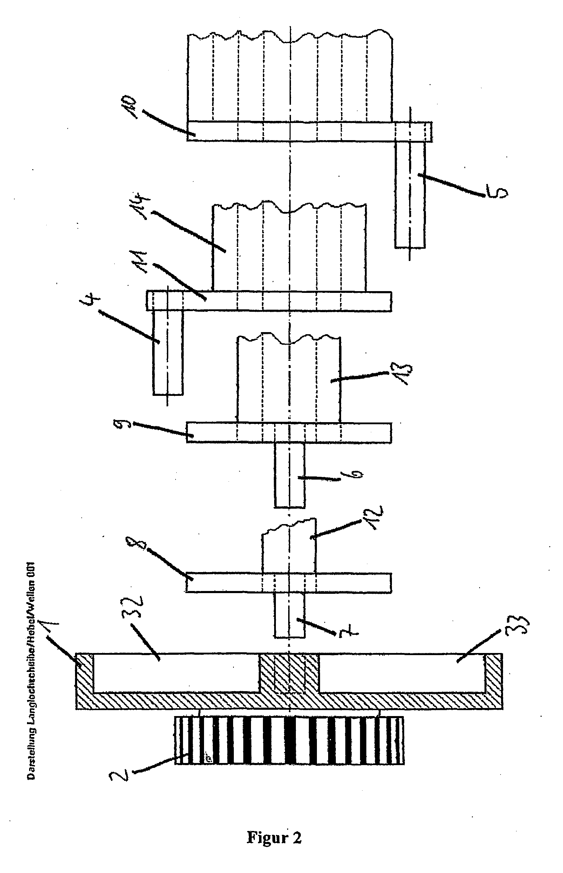

Die Antriebswelle (30) treibt das Zahnrad (28) an. Über das Zahnrad (29), das sich im Eingriff mit Zahnrad (28) befindet wird die Welle (25) angetrieben. Auf der Welle (25) befindet sich das Zahnrad (3), das sich im Eingriff mit dem Zahnrad (2) befindet und damit die Langlochscheibe (1) antreibt. Entsprechend Fig. 1a und Fig. 2 wird die eingehende Drehzahl von der Langlochscheibe (1) über die Hebel (4,5,6,7), die jeweils mit einem Hebelträger (8,9,11,10) verbunden sind, auf die Wellen (12,13,14,15) mit den jeweiligen Freiläufen (16,17,18,19) übertragen. Die Hebel werden in den Langlöchern gelagert und geführt. Für die Funktion der Hebelträger ist nur erforderlich, dass diese und die daran befindlichen Heben sich kollisionsfrei bewegen können und dass die Hebel versetzt zur Achse der Hebelträger angeordnet sind.
Bevorzugt ist dabei, dass die Form der Langlöcher wie in Fig. 4 dargestellt linear ist , wobei die Langlöcher radialsymmetrisch auf der Langlochscheibe (1) angeordnet sind. Andere Formen, wie z.B. nichtlineare Formen, der Langlöcher, insbesondere auch unterschiedliche Formen der Langlöcher untereinander, und Anordnungen auf der Langlochscheibe sind jedoch möglich. Weiterhin kann auch die Anzahl der Langlöcher und der entsprechenden Hebel und Scheiben variiert werden. Entsprechend könnten beispielsweise auch Gleitschienen in einer alternativen Ausführungsform gestaltet sein.

Bei Verwendung einer asymmetrischen radialen Verteilung der Langlöcher und / oder unterschiedliche Formen der Langlöcher untereinander und / oder nichtlineare Formen würde sich eine stärker schwankende Drehzahl ergeben, da sich mit der asymmetrischen Verteilung auch die Übernahmepunkte der Freiläufe verändern. Eine derartige Anordnung kann jedoch z.B. bei Maschinen gewünscht sein, die eine unsymmetrische Rotation erfordern. Beispielhaft seien hierfür Verpackungs- und Druckmaschinen erwähnt.

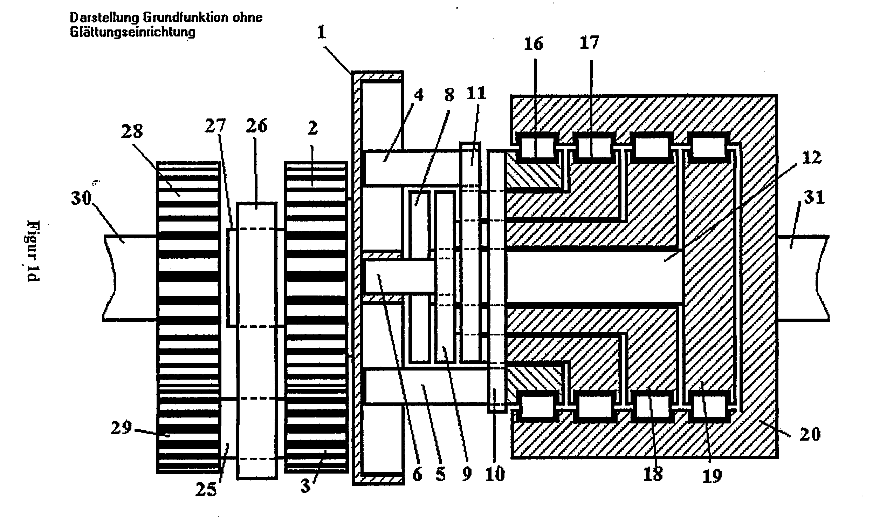

Die Freiläufe (16,17,18,19) befinden sich in einem oder mehreren Freilaufgehäusen. Wird nur ein Freilaufgehäuse eingesetzt, wie in Figur 1d dargestellt, so ist die Abtriebswelle (31) mit dem Freilaufgehäuse zu verbinden. In diesem Fall wäre die Drehzahl an der Abtriebswelle (31) nicht konstant und eine zusätzliche Glättungseinrichtung wäre bei einer gewünschten konstanten Drehzahl vorzusehen.

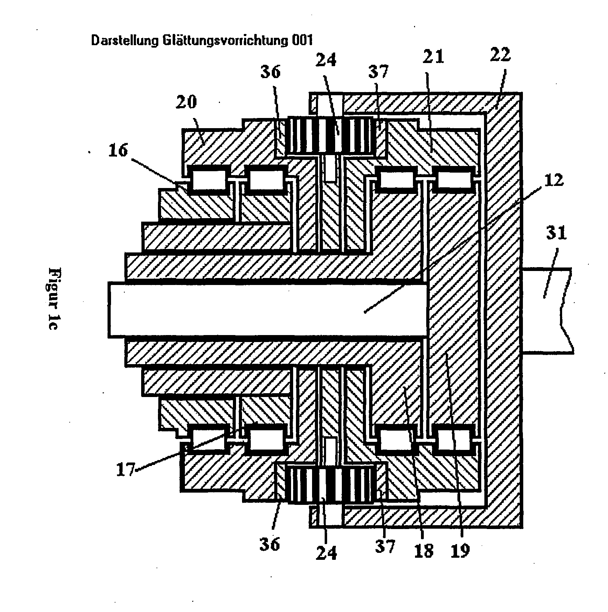

Das Funktionsprinzip einer Glättungseinrichtung, die vorteilhaft eingesetzt werden kann, ist in Figur 1c dargestellt. Auf einer angetriebenen Welle 12 sind weitere, angetriebene Wellen (13,14,15) gelagert, die jeweils einen Freilauf (16,17,18,19) aufweisen. Hierbei treibt jeweils die schnellste Welle über den Freilauf das Freilaufgehäuse an. Durch Aufteilung des Freilaufgehäuses in zwei zunächst getrennte Trommeln treiben jeweils zwei Wellen eine Freilaufgehäuse an. Hierdurch entsteht bei unterschiedlichen Geschwindigkeiten der einzelnen Wellen auch eine unterschiedliche Geschwindigkeit der einzelnen Freilaufgehäuse (20,21).

Wenn z.B. die einzelnen Wellen (12,13,14,15) einen Geschwindigkeitsverlauf aufweisen, der jeweils um 90° phasenverschoben ist, so kann erreicht werden, dass immer 2 Wellen, die zueinander um 180° phasenverschoben sind, einem Freilaufgehäuse zugeordnet sind. Dies führt dazu, dass nach einer halbe Rotation, die jeweils andere Welle in den Freilauf eingreift und den Antrieb der Freilaufgehäuse übernimmt. Entsprechendes gilt auch für die andere Freilauftrommel und die zugeordneten Wellen.

Beide Freilaufgehäuse haben nun eine Geschwindigkeit, die zwischen der maximalen Geschwindigkeit einer angetriebenen Welle und der Übernahmegeschwindigkeit bei doppelter Frequenz oszilliert. Die Geschwindigkeit der Freilaufgehäuse zueinander weist ebenfalls eine Phasenverschiebung von 180° auf. Wird zwischen den Freilaufgehäuse (20,21) über Summierungszahnräder (24) eine Abtriebstrommel (22) angetrieben, so wird die Abtriebstrommel (22) mit der mittleren Geschwindigkeit der Freilaufgehäuse angetrieben, da nun die Zahnräder (24) den Geschwindigkeitsunterschied der Freilaufgehäuse abrollen.

Durch Wahl einer anderen Zahl von Wellen und Freiläufen und deren Zuordnung zu Freilaufgehäusen kann die Geschwindigkeitsamplitude der Freilaufgehäuse, die Übergabegeschwindigkeit, die Phasenverschiebung, usw. geeignet eingestellt werden.

Das hier beschrieben Funktionsprinzip einer Glättungseinrichtung kann in das erfindungsgemäße Getriebe durch die Trennung in zwei oder mehrere Freilaufgehäuse integriert werden.

Im vorliegenden Beispiel in den Figuren 1a und 1b werden jeweils zwei Freiläufe (16 und 17, 18 und 19) einem Gehäuse (20,21) zugeordnet. Insbesondere ist bevorzugt, symmetrisch gegenüberliegende Freiläufe als Freilaufpaarung einem Gehäuse zuzuordnen. Wäre die Freilaufanzahl z.B. sechs , so könnten drei Freiläufe, die jeweils um 120° zueinander stehen einem Freilaufgehäuse zugeordnet werden. Andere Zuordnung, z.B. das die Freiläufe eines 180° Winkelbereiches einem Gehäuse zugeordnet sind, sind jedoch auch möglich.

Für die hier gewählte Ausführungsform mit vier Freiläufen (16,17,18,19) und der Zuordnung zu den Freilaufgehäusen (20,21), geben die beiden Freilaufpaarungen (16 und 17, 18 und 19) jeweils abwechselnd ihre Drehzahl an das jeweilige Freilaufgehäuse (20 oder 21) weiter. Zwischen den beiden Freilaufgehäusen (20,21) sind die Zahnräder (23,24) angeordnet, die in der Abtriebstrommel (22) gelagert sind. Das Freilaufgehäuse (20) weist an der dem Freilauf (21) zugewandten Seite einen Zahnkranz (36) auf, während das Freilaufgehäuse (21) an der dem Freilauf (20) zugewandten Seite einen Zahnkranz (37) aufweist. In die Zahnkränze (36,37) greifen die Zahnräder (23,24) ein und werden über diese geführt. Die Abtriebstrommel (22) ist mit der Abtriebswelle (31) verbunden.

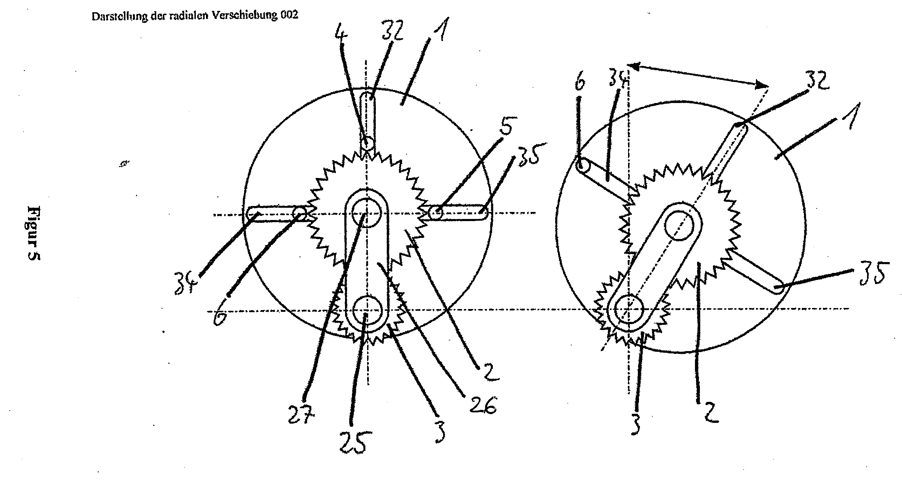

Befindet sich die Welle (27), wie in Fig. 4a, Fig. 5a und Fig.1a gezeigt, in gleicher axialer Ausrichtung wie die Welle (30), d.h. die Langlochscheibe (1) ist nicht radial versetzt, so wird eine konstante Drehzahl von der Langlochscheibe (1) auf die Hebel (4,5,6,7) und die nachfolgenden Bauteile abgegeben.

Die Freiläufe (16,17,18,19) sind dann in ständigem Eingriff mit den Freilaufgehäusen (20,21). Da die Freilaufgehäuse (20,21) die selbe Winkelgeschwindigkeit aufweisen, haben die Zahnräder (23,24) bei dieser Einstellung keine Eigenrotation. Die Abtriebstrommel (22) dreht sich daher mit gleicher Drehzahl wie die Langlochscheibe (1). Die Übersetzung beträgt damit 1:1.

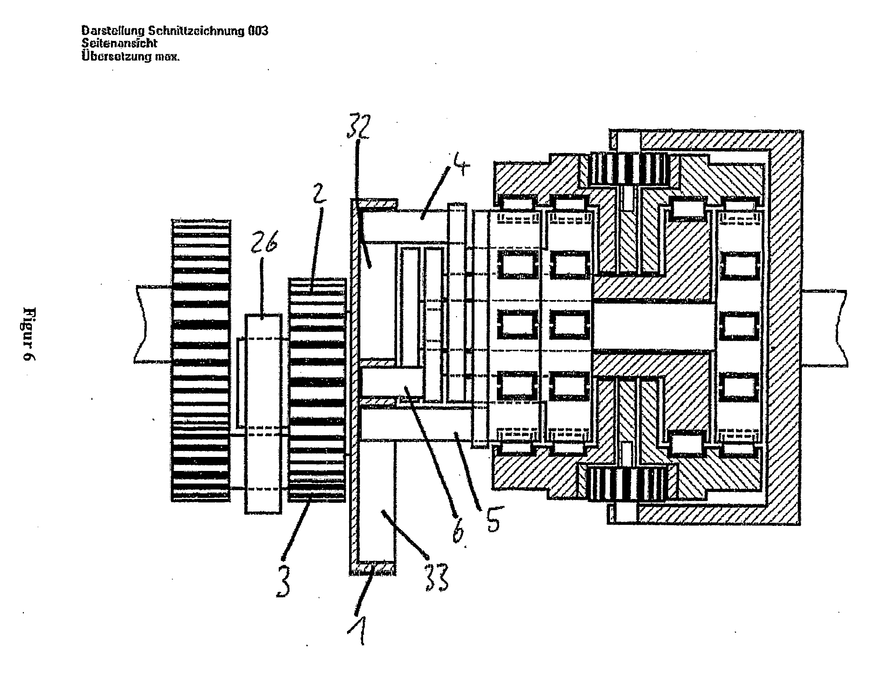

Wird die Langlochscheibe (1) wie in Fig. 4b, Fig. 5b und Fig. 6 gezeigt radial zur Antriebswelle (30) versetzt, so entsteht an den Hebeln (4,5,6,7) eine oszillierende Drehzahl. Anhand Fig. 4b wird der Funktionsablauf illustriert. Bei jeder Umdrehung der Langlochscheibe (1) rotieren die Hebel mit, da sie in der Langlochscheibe geführt werden. Dabei nähern und entfernen sich die Hebel (4,5,6,7) dem Mittelpunkt der Langlochscheibe (1). Im gezeigten Fall wäre die Winkelgeschwindigkeit des Hebels (6) am höchsten, gefolgt von der Hebel (5) und Hebel (4) in abnehmender Reihenfolge und die Winkelgeschwindigkeit des Hebels (7) am geringsten. Da die Hebel (4,5,6,7) über ihre Hebelträger (8,9,11,10) verbunden sind mit den Wellen (12,13,14,15) und diese unterschiedlichen Freilaufpaarungen zugeordnet sind, treibt nun der Hebel (6) über den Freilauf (19) das Freilaufgehäuse (21) an, da der Hebel (7) eine langsamere Winkelgeschwindigkeit aufweist. Ebenso treibt der Hebel (5) über den Freilauf (16) das Freilaufgehäuse (20) an, da der Hebel (4) eine langsamere Winkelgeschwindigkeit aufweist. Es befindet sich jeweils ein Freilauf in jedem Freilaufgehäuse im Eingriff. Je größer die radiale Versetzung der Langlochscheibe (1) wird, desto größer wird der Weg des Hebels mit der höheren Winkelgeschwindigkeit im Vergleich zu dem jeweils langsameren Hebel und damit auch die Übersetzung.

Damit an der Abtriebswelle (31) eine lineare Drehzahl anliegt, wird über die Vorrichtung der Freilaufgehäuse (20,21) und der über die Zahnräder (23,24) verbundenen Abtriebstrommel (22) die Drehzahl geglättet, dadurch dass die Zahnräder (23,24) die Winkelgeschwindigkeit des schneller drehenden Freilaufgehäuses über die Zahnkränze (36,37) gegenüber dem langsamer drehenden Freilaufgehäuse abrollt.

Durch entsprechende Anordnung der Antriebswelle und der Abtriebswelle und Wahl der Drehrichtung kann das Getriebe entweder zur Untersetzung oder zur Übersetzung eingesetzt werden.

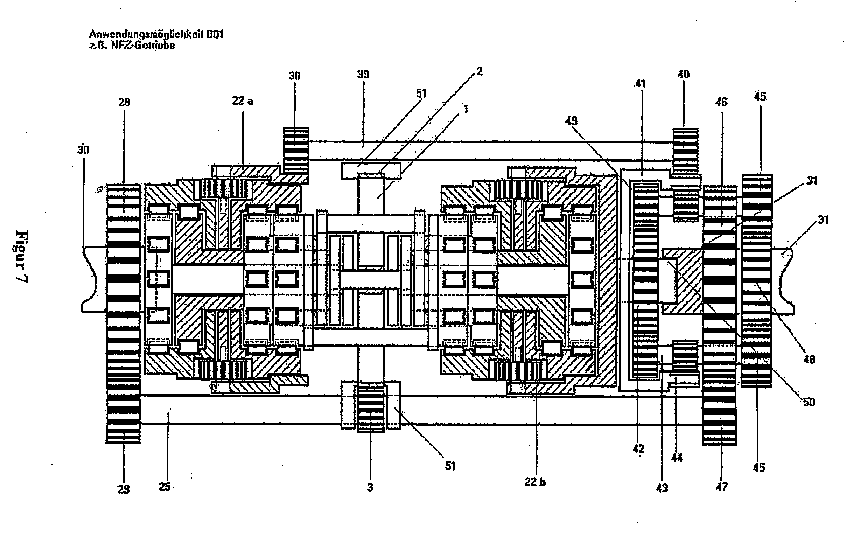

In der Fig. 7 wird eine weitere Ausführungsform eines Getriebes mit unendlich variierbarer Übersetzung von Drehzahl und Drehmoment gezeigt. Das Getriebe weist wie schon in Fig. 4 gezeigt im Inneren relativ zentral eine radial verstellbaren Langlochscheibe (1) auf, in der vier Langlöcher (32,33,34,35) angeordnet sind, in denen die Hebel (4,5,6,7) zu beiden Seiten der Langlochscheibe (1) gelagert und geführt werden. Das Getriebe weist die doppelte Anzahl von Freiläufen gegenüber der ersten Ausführungsform auf. Die Freiläufe sind gegenläufig (invertierend) angeordnet. Das Getriebe ist weiterhin mit einem Planetengetriebe ausgestattet.

Der funktionale Aufbau der erfindungsgemäßen Getriebes wird dabei wieder anhand des Kraftflusses illustriert. Die Bezeichnungen in der Zeichnung entsprechen funktional den Bezeichnungen der ersten Ausführinngsform.

Die Antriebswelle (30) treibt das Zahnrad (28) an. Über das Zahnrad (29), das sich im Eingriff mit Zahnrad (28) befindet wird die Welle (25) angetrieben. Auf der Welle (25) befindet sich das Zahnrad (3), das sich im Eingriff mit dem Zahnkranz (2) der Langlochscheibe (1) befindet und damit die Langlochscheibe (1) antreibt. Entsprechend Fig. 1 und Fig. 2 wird die eingehende Drehzahl von der Langlochscheibe (1) über die Hebel (4,5,6,7), die jeweils mit einem Hebelträger (8,9,11,10) verbunden sind, auf die Wellen (12,13,14,15) mit den jeweiligen Freiläufen (16a,17a,18a,19a und 16b,17b,18b,19b) übertragen. Die Hebel werden in den Langlöchern gelagert und geführt.

Im vorliegenden Beispiel werden jeweils zwei Freiläufe (16a und 17a, 18a und 19a, 16b und 17b, 18b und 19b) als Freilaufpaar einem Freilaufgehäuse (20a, 21a, 20b, 21b) zugeordnet. Die Freiläufe sind dabei invertierend im Getriebe angeordnet. Die Freilaufgehäuse (20a, 21a, 20b, 21b) bilden dabei zwei Freilaufgehäusepaare (20a und 21a, 20b und 21b). Ein Freilaufgehäusepaar bildet den Zug- und das andere den Schubteil des Getriebes. Hierdurch kann die volle Bremswirkung des Antriebes genutzt werden.

Beschleunigt der Antrieb, geben die beiden Freilaufpaarungen (16a und 17a, 18a und 19a) jeweils abwechselnd ihre Drehzahl an das jeweilige Freilaufgehäuse (20a,21a) weiter . Zwischen den beiden Freilaufgehäusen (20a,21a) sind Zahnräder (24) angeordnet, die in einer Welle (23) gelagert sind. Das Freilaufgehäuse (20a) weist an der dem Freilauf (21a) zugewandten Seite einen Zahnkranz (36) auf, während das Freilaufgehäuse (21a) an der dem Freilauf (20a) zugewandten Seite einen Zahnkranz (37) aufweist. In die Zahnkränze (36,37) greifen die Zahnräder (24) ein und werden über diese geführt. Die Abtriebstrommel (22a) ist über das Zahnrad (38) mit der Welle (39) und dem Zahnrad (40) verbunden. Das Zahnrad (40) treibt die Planetentrommel (41) an.

Zwischen den beiden Freilaufgehäusen (20b,21b) sind Zahnräder (24) angeordnet, die in einer Welle (23) gelagert sind. Das Freilaufgehäuse (20b) weist an der dem Freilauf (21b) zugewandten Seite einen Zahnkranz (36) auf, während das Freilaufgehäuse (21b) an der dem Freilauf (20b) zugewandten Seite einen Zahnkranz (37) aufweist. In die Zahnkränze (36,37) greifen Zahnräder (24) ein und werden über diese geführt. Die Abtriebstrommel (22b) ist über die Welle (50) mit dem Zahnrad (42) verbunden. Das Zahnrad (42) befindet sich im Eingriff mit Zahnrädern (49) die sich auf Planetenwellen (43) befinden. Die Anzahl der Plantetenwellen (43) und damit der darauf befindlichen Zahnräder (44,45,49) beträgt mindestens eins, jedoch ist zur Vermeidung von Unwucht eine Anzahl von drei und mehr bevorzugt.

Die Planetenwellen (43) tragen Zahnräder (44), die sich im Eingriff mit der Planetenwelle (41) befinden, Zahnräder (45), die sich im Eingriff mit dem Abtriebszahnrad (48) befinden und Zahnräder (49), die sich im Eingriff mit Zahnräder (42) befinden. Die Planetenwellen (43) sind im Zahnrad (46) gelagert und werden hierdurch auch geführt. Das Zahnrad (46) wird über die Welle (25) und das Zahnrad (47) angetrieben.

Die Langlochscheibe (1) wird in der Vorrichtung (51) geführt und gelagert. Wird die Langlochscheibe radial zur Antriebswelle (30) versetzt, so entsteht an den Hebeln (4,5,6,7) eine oszillierende Drehzahl, die je nach positiver oder negativer Beschleunigung auf die entsprechenden Freiläufe wirkt.

Die Antriebswelle (30) treibt also sowohl die Langlochscheibe (1) über den Zahnkranz (2) und das Zahnrad (3) als auch über das Zahnrad (47) das Zahnrad (46), welches die Planetenwellen (43) trägt. Die Langlochscheibe (1) treibt über die Hebel und die Freiläufe die Planetentrommel (41) und das einem Sonnenrad entsprechende Zahnrad (42) an.

Je nach Drehzahl der einzelnen Komponenten des Planetengetriebes also des Hohlrades das durch die Planetentrommel (41) gebildet wird, das Sonnenrad, das durch Zahnrad (42) gebildet wird und die Planetenräder, die durch Zahnräder (49) gebildet werden, ergibt sich eine positive Drehzahl, die Drehzahl 0 min⁻¹ oder eine negative Drehzahl an der Abtriebswelle (31). Diese Anordnung ermöglicht also die stufenlose Umkehr der Drehrichtung (Vorwärts - Rückwärts) und es kann ein sogenannter Nullpunkt festlegt werden, an dem die Ausgangsdrehzahl an der Abtriebswelle (31) unabhängig von der anliegenden Eingangsdrehzahl der Antriebswelle (30) Null beträgt, auch wenn an der Abtriebswelle ein Drehmoment anliegen sollte. Eine derartige Situation ergibt sich z.B. bei Einsatz des Getriebes in einem Fahrzeugantriebsstrang an einem Gefälle im Fahrzeugstillstand.

Andere Ausführungsformen, wie z.B. kombinierte Antriebs- und Schubbegrenzungsgetriebe, mit oder ohne getrenntem Steuerantrieb, mit oder ohne Glättungseinrichtung, mit oder ohne Planetengetriebe, sind dem Fachmann offenbar.

Die in der Erfindung vorgestellte kontinuierlich variierbare Übersetzung für Drehmoment und Drehzahl mit einer radial verstellbaren Führungseinrichtung ist zur Anwendung in Personenfahrzeugen, Nutzfahrzeugen, Schiffen, Eisenbahnen, Maschinenbau, Krafterzeugungsmaschinen und Arbeitsmaschinen geeignet jedoch nicht auf diese Anwendungen beschränkt.

### Bezugszeichenliste

Bezeichnungen von 1 bis 37 gelten für beide Ausführungsformen. Die Bezeichnungen 38 bis 51 sind nur in der zweiten Ausführungsform dargestellt.
- 1: Langlochscheibe, Führungseinrichtung
- 2: Zahnrad bzw. Zahnkranz der Langlochscheibe (1) im Eingriff mit Zahnrad (3)
- 3: Zahnrad, Steuerantrieb
- 4: Hebel
- 5: Hebel
- 6: Hebel
- 7: Hebel
- 8: Hebelträger mit Hebel (7)
- 9: Hebelträger mit Hebel (6)
- 10: Hebelträger mit Hebel (5)
- 11: Hebelträger mit Hebel (4)
- 12: Welle für Freilauf (19)
- 13: Welle für Freilauf (18)
- 14: Welle für Freilauf (17)
- 15: Welle für Freilauf (16)
- 16: Freilauf
- 17: Freilauf
- 18: Freilauf
- 19: Freilauf
- 20: Freilaufgehäuse mit Freiläufen (16/17)
○ 20a Freilaufgehäuse mit Freiläufen (16a/17a)
○ 20b Freilaufgehäuse mit Freiläufen (16b/17b)
- 21: Freilaufgehäuse mit Freiläufen (18/19)
○ 21a Freilaufgehäuse mit Freiläufen (18a/19a)
○ 21b Freilaufgehäuse mit Freiläufen (18b/19b)
- 22: Abtriebstrommel
○ 22a Abtriebstrommel
○ 22b Abtriebstrommel
- 23: Welle mit Summierungszahnrad (24)
- 24: Summierungszahnrad umlaufend
- 25: Welle mit Zahnräder (29,3) bzw. (29,3,47)
- 26: Hebel mit Wellen für radiale Verstellung (25,27)
- 27: Welle mit Zahnrad (2)
- 28: Zahnrad, Steuerantrieb
- 29: Zahnrad, Steuerantrieb
- 30: Eingangswelle
- 31: Abtriebswelle
- 32: Langloch, Führung
- 33: Langloch, Führung
- 34: Langloch, Führung
- 35: Langloch, Führung
- 36: Zahnkranz auf Freilaufgehäuse
- 37: Zahnkranz auf Freilaufgehäuse
- 38: Zahnrad auf Welle (39) im Einriff mit Summierungstrommel (22 a)
- 39: Welle mit Zahnrädern (38,40)
- 40: Zahnrad auf Welle (39) im Eingriff mit Planetentrommel (41)
- 41: Planetentrommel mit durchlaufender Welle (50)
- 42: Zahnrad auf Welle (51) im Eingriff mit Planetenzahnräder (50)
- 43: Umlaufende Planetenwelle mit Zahnrädern
- 44: Zahnrad im Eingriff mit Planetentrommel (41)
- 45: Zahnrad auf Planetenwelle (43) im Eingriff Abtriebszahnrad (48)
- 46: Zahnrad im Eingriff mit Zahnrad (47) und Träger von Wellen (43) mit Welle (31) durchlaufend
- 47: Zahnrad auf Welle (25) im Eingriff mit Zahnrad (46)
- 48: Abtriebszahnrad auf Abtriebswelle (31) im Eingriff mit Zahnräder (45)
- 49: Zahnrad auf Planetenwelle (43) umlaufend im Eingriff mit Zahnrad (42)
- 50: Welle angetrieben von Summierungstrommel (22 b) mit Zahnrad (42)
- 51: Vorrichtung zur Führung der Langlochscheibe (1)

## Patentansprüche

1. Stufenloses Getriebe mit einer Antriebswelle (30) und einer Abtriebswelle (31), aufweisend:
eine mit mindestens zwei Führungen (32,33,34,35) versehene Führungseinrichtung (1), die mit der Antriebswelle direkt oder indirekt gekoppelt ist,
mindestens zwei in den Führungen der Führungseinrichtung gelagerte und geführte Hebel (4,5,6,7);
mindestens zwei an den Hebeln exzentrisch befestigte Hebelträger (8,9,10,11);
mindestens eine Welle (12,13,14,15), auf der die Hebelträger geführt sind und die mindestens einen Freilauf (16,17,18,19) aufweist; und
mindestens ein Freilaufgehäuse (20,21), in das der mindestens eine Freilauf eingreift und das mit der Abtriebswelle direkt oder indirekt gekoppelt ist,
**dadurch gekennzeichnet, dass**
die Führungseinrichtung radial zur Antriebswelle versetzbar ist.

2. Stufenloses Getriebe nach Anspruch 1, **dadurch gekennzeichnet, dass** das Getriebe eine Glättungseinrichtung aufweist.

3. Stufenloses Getriebe nach einem der Ansprüche 1 bis 2, **dadurch gekennzeichnet, dass** das Getriebe zwei Freilaufgehäuse aufweist.

4. Stufenloses Getriebe nach einem der Ansprüche 1 bis 3, **dadurch gekennzeichnet, dass** die Führungen linear sind.

5. Stufenloses Getriebe nach einem der Ansprüche 1 bis 4, **dadurch gekennzeichnet, dass** mindestens ein Freilaufgehäuse mindestens zwei Freiläufe aufweist.

6. Stufenloses Getriebe mit einer Antriebswelle (30) und einer Abtriebswelle (31) und einem Planetengetriebe (41,42,43,44), aufweisend:
eine mit mindestens zwei Führungen (32,33,34,35) versehene Führungseinrichtung (1), die mit der Antriebswelle direkt oder indirekt gekoppelt ist,
mindestens zwei in den Führungen der Führungseinrichtung gelagerte und geführte Hebel (4,5,6,7);
mindestens vier an den Hebeln exzentrisch befestigte Hebelträger (8,9,10,11);
mindestens zwei Wellen (12,13,14,15), auf denen die Hebelträger geführt sind und die mindestens je einen Freilauf (16a, 17a, 18a, 19a; 16b, 17b, 18b, 19b) aufweisen; und
mindestens zwei Freilaufgehäuse (20a,21a;20b,21b), in die der mindestens je eine Freilauf eingreift und welche mit der Abtriebswelle indirekt oder direkt gekoppelt sind, wobei
die Führungseinrichtung radial zur Antriebswelle versetzbar ist.

7. Stufenloses Getriebe nach Anspruch 6, **dadurch gekennzeichnet, dass** das Getriebe eine Glättungseinrichtung aufweist.

8. Stufenloses Getriebe nach einem der Ansprüche 6 bis 7, **dadurch gekennzeichnet, dass** das Getriebe vier Freilaufgehäuse aufweist.

9. Stufenloses Getriebe nach einem der Ansprüche 6 bis 8, **dadurch gekennzeichnet, dass** die Führungen linear sind.

10. Stufenloses Getriebe nach einem der Ansprüche 6 bis 9, **dadurch gekennzeichnet, dass** mindestens je ein Freilaufgehäuse mindestens zwei Freiläufe aufweist.

## Claims

1. A continuously variable transmission comprising a driving shaft (30) and an output shaft (31), having:
a guide apparatus (1) provided with at least two guides (32, 33, 34, 35), said guide apparatus being coupled directly or indirectly with the driving shaft,
at least two levers (4, 5, 6, 7) disposed and guided in the guides of the guide apparatus;
at least two lever carriers (8, 9, 10, 11) eccentrically fixed to the levers;
at least one shaft (12, 13, 14, 15) on which the lever carriers are guided having at least one freewheel (16, 17, 18, 19); and
at least one freewheel housing (20, 21), in which the at least one freewheel engages and which is coupled directly or indirectly with the driving shaft,
**characterized in that**
the guide apparatus is displaceable radially with respect to the driving shaft.

2. The continuously variable transmission according to claim 1 **characterized in that** the transmission has a smoothing device.

3. The continuously variable transmission according to one of claims 1 to 2 **characterized in that** the transmission has two freewheel housings.

4. The continuously variable transmission according to one of claims 1 to 3 **characterized in that** the guides are linear.

5. The continuously variable transmission according to one of claims 1 to 4 **characterized in that** at least one freewheel housing has at least two freewheels.

6. A continuously variable transmission comprising a driving shaft (30) and an output shaft (31) and a planetary gear set (41, 42, 43, 44), having:
a guide apparatus (1) provided with at least two guides (32, 33, 34, 35), said guide apparatus being coupled directly or indirectly with the driving shaft,
at least two levers (4, 5, 6, 7) disposed and guided in the guides of the guide apparatus;
at least four lever carriers (8, 9, 10, 11) eccentrically fixed to the levers;
at least two shafts (12, 13, 14, 15) on which the lever carriers are guided each having at least one freewheel (16a, 17a, 18a, 19a, 16b, 17b, 18b, 19b); and
at least two freewheel housings (20a, 21a, 20b, 21 b), in each of which the at least one freewheel engages and which are coupled directly or indirectly with the driving shaft, wherein
the guide apparatus is displaceable radially with respect to the driving shaft.

7. The continuously variable transmission according to claim 6 **characterized in that** the transmission has a smoothing device.

8. The continuously variable transmission according to one of claims 6 to 7 **characterized in that** the transmission has four freewheel housings.

9. The continuously variable transmission according to one of claims 6 to 8 **characterized in that** the guides are linear.

10. The continuously variable transmission according to one of claims 6 to 9 **characterized in that** at least one freewheel housing in each case has at least two freewheels.

## Revendications

1. Transmission à réglage continu avec un arbre d'entraînement (30) et un arbre mené (31), présentant :
un équipement de guidage (1) doté d'au moins deux coulisses (32, 33, 34, 35) et couplé directement ou indirectement à l'arbre d'entraînement ;
au moins deux leviers (4, 5, 6, 7) logés et guidés dans les coulisses de l'équipement de guidage ;
au moins deux supports de leviers (8, 9, 10, 11) fixés excentriquement sur les leviers ;
au moins un arbre (12, 13, 14, 15) sur lequel sont guidés les supports de leviers et qui présente au moins une roue libre (16, 17, 18, 19) ; et
au moins un carter de roues libres (20, 21) dans lequel prend (prennent) la (les) roue(s) libre(s) et qui est couplé directement ou indirectement à l'arbre mené ;
**caractérisée en ce que**
l'équipement de guidage peut être déplacé radialement par rapport à l'arbre d'entraînement.

2. Transmission à réglage continu selon la revendication 1, **caractérisée en ce que** la transmission présente un équipement de lissage.

3. Transmission à réglage continu selon l'une quelconque des revendications 1 à 2, **caractérisée en ce que** la transmission présente deux carters de roues libres.

4. Transmission à réglage continu selon l'une quelconque des revendications 1 à 3, **caractérisée en ce que** les coulisses sont linéaires.

5. Transmission à réglage continu selon l'une quelconque des revendications 1 à 4, **caractérisée en ce qu'**au moins un carter de roues libres présente au moins deux roues libres.

6. Transmission à réglage continu avec un arbre d'entraînement (30) et un arbre mené (31) et un réducteur planétaire (41, 42, 43, 44), présentant :
un équipement de guidage (1) doté d'au moins deux coulisses (32, 33, 34, 35) et couplé directement ou indirectement à l'arbre d'entraînement ;
au moins deux leviers (4, 5, 6, 7) logés et guidés dans les coulisses de l'équipement de guidage ;
au moins quatre supports de leviers (8, 9, 10, 11) fixés excentriquement sur les leviers ;
au moins deux arbres (12, 13, 14, 15) sur lesquels sont guidés les supports de leviers et qui présente chacun au moins une roue libre (16a, 17a, 18a, 19a ; 16b, 17b, 18b, 19b) ; et
au moins deux carters de roues libres (20a, 21 a, 20b, 21 b) dans lesquels prend (prennent) la (les) roue(s) libre(s) et qui sont couplés indirectement ou directement à l'arbre mené, l'équipement de guidage pouvant être déplacé radialement par rapport à l'arbre d'entraînement.

7. Transmission à réglage continu selon la revendication 6, **caractérisée en ce que** la transmission présente un équipement de lissage.

8. Transmission à réglage continu selon l'une quelconque des revendications 6 à 7, **caractérisée en ce que** la transmission présente quatre carters de roues libres.

9. Transmission à réglage continu selon l'une quelconque des revendications 6 à 8, **caractérisée en ce que** les coulisses sont linéaires.

10. Transmission à réglage continu selon l'une quelconque des revendications 6 à 9, **caractérisée en ce qu'**au moins chaque carter de roues libres présente au moins deux roues libres.
